# EUROPÄISCHE PATENTANMELDUNG

(11) **EP 4 470 384 A1**
(43) Veröffentlichungstag der Anmeldung: **04.12.2024**
(21) Anmeldenummer: 23176684.1
(22) Anmeldetag: 01.06.2023
(51) Int. Cl.: A23C 19/028, A23C 19/068, A23C 9/123, A23C 9/142

(54) **FESTES MILCHPRODUKT**

(71) Anmelder: DMK Deutsches Milchkontor GmbH, 27404 Zeven (DE)
(72) Erfinder: DÖRING, Sven-Rainer, 27404 Zeven (DE); Steffens, Marco, 27404 Elsdorf (DE)
(74) Vertreter: Fabry, Bernd

(57) **Zusammenfassung**

Vorgeschlagen wird ein festes Milchprodukt, erhalten oder erhältlich durch die folgenden Schritte:
(a) Bereitstellen einer Magermilch;
(b) Mikro- und/oder Ultrafiltration der Magermilch unter Erhalt eines Permeats P1 und eines Retentats R1; und
(c) Einstellen des Retentats auf eine pH-Wert im Bereich von etwa 4 bis etwa 5,5.

Das Produkt weist die Textur ähnlich einem Brat- oder Grillkäse auf.

## Beschreibung

### GEBIET DER ERFINDUNG

Die vorliegende Erfindung befindet sich auf dem Gebiet der Käseersatzstoffe und betrifft ein festes Milchprodukt, das die Textur eines Brat- oder Grillkäses besitzt.

### TECHNOLOGISCHER HINTERGRUND

Der klassische Bratkäse ist ein Schweizer Halbhartkäse der Vollfettstufe (45-50 % Fett in der Trockenmasse). Er schmeckt mild und leicht säuerlich und wird in Laiben von ca. 750-1100 g fast ausschließlich aus pasteurisierter Milch, gefertigt. Seinen Namen erhielt der Käse durch die historische Zubereitungsart. Erste literarische Belege für sein Vorkommen lassen sich bis ins Mittelalter zurückverfolgen, wo in klösterlichen Schriften über den Genuss eines geschmolzenen Käses über dem offenen Feuer berichtet wird. Durch fortschreitende, technische und wirtschaftliche Entwicklungsprozesse begünstigt, begann ab dem 15. Jahrhundert eine absatzorientierte Mehrfachproduktion des Käses. Verantwortlich für die geschmackliche und wirtschaftlich verwertbare Weiterentwicklung und Perfektionierung war vor allem der beginnende Einsatz der Labkäsetechnik, bei der durch die Beigabe von Kalbmägen-Enzymen eine weitaus höhere Haltbarkeitszeit ermöglicht wird.

In den letzten Jahren hat auch der Halloumi viele neue Freunde gewonnen. Halloumi, eine altägyptische Urform der Käsezubereitung, gilt als Spezialität im östlichen mediterranen Raum, in dem der Käse seit über 2000 Jahren hergestellt wird, ursprünglich aus der Milch von Mufflons. Der heute vor allem aus Schafsmilch hergestellte Käse ähnelt Mozzarella, ist aber fester und würziger. Anders als die meisten anderen Käse behält er seine Form, wenn er erhitzt wird. Zur Herstellung von Halloumi werden frische Milch und Sahne auf Körpertemperatur erwärmt, mit Wasser vermischtes Lab und Salz hinzugegeben, die entstandene Käseschicht nach etwa einer Dreiviertelstunde behutsam zerteilt und alles noch einmal kurz erwärmt. Danach wird die Molke durch ein Sieb abgegossen, die Käsemasse kraftvoll ausgedrückt, in fingerdicke Quadrate geformt und einige Zeit ruhen gelassen. Schließlich wird der Käse für etwa zehn Minuten in der Molke gekocht, herausgenommen, von einer Seite mit Salz und meist Minze bestreut, einmal gefaltet und zusammengedrückt, wodurch er seine typische Form erhält.

### STAND DER TECHNIK

Aus FR 2556565 A1 (ROQUEFORT) ist ein Verfahren zur Herstellung von Halloumi-Käse bekannt, bei der von Schafsmilch ausgegangen wird. Bei diesem Verfahren findet keine Abtrennung der Molke statt.

Gegenstand der CN 109105523 B1 (HARBIN) ist ein Verfahren zur Verlängerung der Haltbarkeit von Halloumi-Käse durch Beschichten mit einer Nanoemulsion aus essentiellen Ölen.

### AUFGABE DER ERFINDUNG

Brat- und Grillkäse der genannten Art werden grundsätzlich auf der Basis von Vollmilch gewonnen, haben daher einen hohen Protein- und Fettgehalt und sind entsprechend kalorienreich. Daher hat die Aufgabe der vorliegenden Erfindung darin bestanden, einen alternativen Brat- oder Grillkäse zur Verfügung zu stellen, der in Textur und Geschmack den Produkten des Marktes entspricht, aber bei vergleichbarem Proteingehalt, weniger Fett und damit deutlich weniger Kalorien besitzt.

### BESCHREIBUNG DER ERFINDUNG

Ein erster Gegenstand der Erfindung betrifft ein festes Milchprodukt, erhalten oder erhältlich durch die folgenden Schritte:
(a) Bereitstellen einer Magermilch;
(b) Mikro- und/oder Ultrafiltration der Magermilch unter Erhalt eines Permeats P1 und eines Retentats R1; und
(c) Einstellen des Retentats auf eine pH-Wert im Bereich von etwa 4 bis etwa 5,5.

Das Milchprodukt zeichnet sich insbesondere dadurch aus, dass es eine säureinduzierte Textur besitzt, die einem Brat- oder Grillkäse, insbesondere einem Halloumi-Käse ähnelt.

Ein weiterer Gegenstand der Erfindung betrifft ein Verfahren zur Herstellung eines festen Milchproduktes, umfassend oder bestehend aus den folgenden Schritten:
(a) Bereitstellen einer Magermilch;
(b) Mikro- und/oder Ultrafiltration der Magermilch unter Erhalt eines Permeats P1 und eines Retentats R1; und
(c) Einstellen des Retentats auf eine pH-Wert im Bereich von etwa 4 bis etwa 5,5.

Überraschenderweise wurde gefunden, dass sich ein Brat- und Grillkäse der gewünschten Textur auch auf Basis von Magermilch, also Kuhmilch, herstellen lässt, der deutlich kalorienärmer ist.

### Einsatzstoffe

Die erfindungsgemäßen festen Milchprodukte stellen Magermilchprodukte dar, sind also per Definition Kuhmilchprodukte. Magermilch wird aus Vollmilch durch Abtrennung des Rahms erhalten. Auf diese Weise wird der Fettgehalt von etwa 4 Gew.-% auf unter 0,5 Gew.-% gebracht. Weiterhin enthält Magermilch etwa 3,5 Gew.-% Proteine. Die Abtrennung von Feststoffen sowie die Entrahmung erfolgen üblicherweise in einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "ProCool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie dem allgemeinen Fachwissen zuzurechnen sind.

Ein weiterer Verarbeitungsschritt bei der Herstellung von Magermilch ist üblicherweise die Pasteurisierung, bei der die Milch kurzzeitig in Wärmeaustauschern erhitzt und die enthaltenen Keime abgetötet werden. An den Wärmeaustauschern liegt ein Temperaturgradient an, der so gewählt ist, dass das Produkt für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Anstelle der Magermilch können auch Konzentrate eingesetzt werden. Diese werden aus Magermilch durch Entzug von Wasser erhalten und weisen dann Feststoffgehalte von etwa 30 bis etwa 40 Gew.-% und insbesondere von etwa 35 Gew.-% auf.

### Mikro- oder Diafiltration

Die Mikro- oder Diafiltration gehört zu den Membrantrennverfahren. Der wesentliche Unterschied zu Ultra- und Nanofiltration besteht in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Nano- oder Ultrafiltration genannt, während die Filtration bei Porengrößen > 0,1 µm, speziell von etwa 0,1 bis 1 pm, gewöhnlich als Mikro- oder Diafiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind. Vorzugsweise wird die Filtration mit Membranen durchgeführt, die einen Porendurchmesser von etwa 50.000 bis etwa 100.000 Dalton aufweisen.

### Ultrafiltration

Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der bei Ultra- und Mikrofiltration zwischen 0,1 und 10 bar und bei der Nanofiltration bis ca. 40 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für Ultra- und Nanofiltration und die zweite für die Mikrofiltration besonders bevorzugt erwiesen hat.

Alle genannten Filtrationsverfahren können im Sinne der vorliegenden Erfindung unabhängig voneinander "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

### Säuerung

Die Säuerung ist ein kritischer Schritt, da sie so durchgeführt werden muss, dass keine Denaturierung der Milchproteine stattfindet. In einer ersten Ausführungsform kann die durch die Zugabe von Milchsäurekulturen erfolgen, wie sie auch in der Käseherstellung Verwendung finden. Bevorzugt ist jedoch der Einsatz von Glucono-delta-Lacton (GDL., E575).

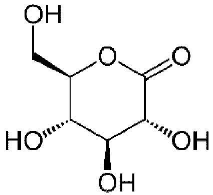

Bei dieser Alternative wird anstelle von Milchsäure Gluconsäure gebildet, die zu noch weniger Denaturierung führt.

Die Säuerung wird vorzugsweise bei einer Temperatur von etwa 20 bis etwa 50 °C durchführt. Als besonders vorteilhaft haben sich Temperaturen im Bereich von 25 bis 30 °C erwiesen. Die Zeitdauer für die Säuerung kann im Bereich von etwa 2 bis etwa 15 Stunden liegen und beträgt vorzugsweise etwa 5 bis etwa 10 Stunden. Besonders bevorzugt ist es, die Säuerung mit Milchsäurekulturen und insbesondere GDL bei 25 bis 30 °C über 5 bis 10 Stunden durchzuführen.

In einer weiteren bevorzugten Ausführungsform setzt man dem Ansatz während der Säuerung Lab zu, beispielsweise in Mengen von 0,1 bis 1,0 Gew.-%. Auf diese Weise werden besonders feste Produkte erhalten. In diesem Zusammenhang hat sich vor allem auch die Kombination von GDL als Säuerungsmittel und Lab als Zusatzstoff als besonders vorteilhaft erwiesen.

Während der Säuerung können auch weitere Geschmacks- und Aromastoffe zugesetzt werden, beispielsweise in Mengen von etwa 1 bis etwa 5 Gew.-%, wobei sich die Menge an sich unkritisch ist und sich ausschließlich nach dem gewünschten Geschmackserlebnis richtet. Typische Beispiele für Zusatzstoffe sind Kochsalz sowie beliebige Gewürze wie - ohne Anspruch auf Vollzähligkeit - Rosmarin, Thymian, Paprika, Minze und Zwiebeln.

### GEWERBLICHE ANWENDBARKEIT

Ein weiterer Gegenstand der Erfindung betrifft die Verwendung des festen Milchproduktes oder des wie oben beschriebenen Verfahrensproduktes als Ersatz für Bratkäse, insbesondere als Ersatz für Halloumi-Käse.

Soweit in der Beschreibung bevorzugte Ausführungsformen genannt werden, so umfasst die technische Lehre der Erfindung beliebige Kombinationen von bevorzugten Ausführungsformen als besonders bevorzugt, ohne dass es hierzu einer wörtlichen Offenbarung bedarf.

### BEISPIELE

### Beispiel 1

### Herstellung eines Grillkäses ausgehend von Magermilch

100 kg Magermilch mit einem Proteingehalt von 3,5 Gew.-% und einem Fettanteil von weniger als 0,5 Gew.-% wurde bei 25 °C einer Ultrafiltration (Spiralwickelmembran, Trennschärfe 40.000 Dalton) unterworfen. Das Permeat wurde einer anderen Verwendung zugeführt und das Retentat bei etwa 25 °C durch Zugabe von Milchsäurekulturen über einen Zeitraum von etwa 10 h bei einem pH-Wert von 5 gehalten. Während dieser Zeit wurden 1 Gew.-% Kochsalz sowie 2 Gew.-% einer Kräutermischung hinzugegeben und unter Rühren in die sich verfestigende Masse eingearbeitet. Nach Abschluss der Säuerung wurde ein schnittfestes Produkt erhalten, das die Textur eines typischen Bratkäses aufwies und bei Erhitzen in der Pfanne eine braune Kruste ausbildete.

### Beispiel 2

### Herstellung eines Grillkäses ausgehend von Magermilch

100 kg Magermilch mit einem Proteingehalt von 3,5 Gew.-% und einem Fettanteil von weniger als 0,5 Gew.-% wurde bei 25 °C einer Mikrofiltration (Trennschärfe 0,1 µm) unterworfen. Das Permeat wurde einer anderen Verwendung zugeführt und das Retentat bei etwa 25 °C durch Zugabe von Milchsäurekulturen über einen Zeitraum von etwa 10 h bei einem pH-Wert von 5 gehalten. Während dieser Zeit wurden 1 Gew.-% Kochsalz sowie 2 Gew.-% einer Kräutermischung hinzugegeben und unter Rühren in die sich verfestigende Masse eingearbeitet. Nach Abschluss der Säuerung wurde ein schnittfestes Produkt erhalten, das die Textur eines typischen Bratkäses aufwies und bei Erhitzen in der Pfanne eine braune Kruste ausbildete.

### Beispiel 3

### Herstellung eines Grillkäses ausgehend von Magermilchkonzentrat

100 kg Magermilchkonzentrat mit einem Feststoffgehalt von etwa 35 Gew.-% wurde bei 20 °C einer Ultrafiltration (Spiralwickelmembran, Trennschärfe 30.000 Dalton) unterworfen. Das Permeat wurde einer anderen Verwendung zugeführt und das Retentat bei etwa 25 °C durch Zugabe von Glucono-delta-Lacton über einen Zeitraum von etwa 8 h bei einem pH-Wert von 5,5 gehalten. Während dieser Zeit wurden 1 Gew.-% Kochsalz sowie 2 Gew.-% einer Kräutermischung hinzugegeben und unter Rühren in die sich verfestigende Masse eingearbeitet. Nach Abschluss der Säuerung wurde ein schnittfestes Produkt erhalten, das die Textur eines typischen Bratkäses aufwies und bei Erhitzen in der Pfanne langsam schmolz.

### Beispiel 4

### Herstellung eines Grillkäses ausgehend von Magermilchkonzentrat mit Lab

100 kg Magermilchkonzentrat mit einem Feststoffgehalt von etwa 35 Gew.-% wurde bei 30 °C einer Ultrafiltration (Spiralwickelmembran, Trennschärfe 50.000 Dalton) unterworfen. Das Permeat wurde einer anderen Verwendung zugeführt und das Retentat bei etwa 25 °C durch Zugabe von Glucono-delta-Lacton über einen Zeitraum von etwa 8 h bei einem pH-Wert von 5,5 gehalten. Während dieser Zeit wurden 0,5 Gew.-% Lab, 1 Gew.-% Kochsalz sowie 2 Gew.-% einer Kräutermischung hinzugegeben und unter Rühren in die sich verfestigende Masse eingearbeitet. Nach Abschluss der Säuerung wurde ein schnittfestes Produkt erhalten, das die Textur von Halloumi-Käse aufwies und bei Erhitzen auf dem Grill nicht schmolz.

## Patentansprüche

1. Festes Milchprodukt, erhalten oder erhältlich durch die folgenden Schritte:
(a) Bereitstellen einer Magermilch;
(b) Mikrofiltration und/oder Ultrafiltration der Magermilch unter Erhalt eines Permeats P1 und eines Retentats R1; und
(c) Einstellen des Retentats auf eine pH-Wert im Bereich von etwa 4 bis etwa 5,5.

2. Milchprodukt nach Anspruch 1, **dadurch gekennzeichnet, dass** es eine Textur besitzt, die einem Brat- oder Grillkäse, ähnelt.

3. Verfahren zur Herstellung eines festen Milchproduktes, umfassend oder bestehend aus den folgenden Schritten:
(a) Bereitstellen einer Magermilch;
(b) Mikrofiltration und/oder Ultrafiltration der Magermilch unter Erhalt eines Permeats P1 und eines Retentats R1; und
(c) Einstellen des Retentats auf eine pH-Wert im Bereich von etwa 4 bis etwa 5,5.

4. Verfahren nach Anspruch 3, **dadurch gekennzeichnet, dass** man als Magermilch ein Magermilchkonzentrat einsetzt, welches einen Feststoffgehalt von etwa 30 bis etwa 40 Gew.- % aufweist.

5. Verfahren nach den Ansprüchen 3 und/oder 4, **dadurch gekennzeichnet, dass** man
- die Mikrofiltration mit Membranen durchführt, die einen Porendurchmesser von etwa 50.000 bis etwa 100.000 Dalton und/oder
- die Ultrafiltration mit Membranen durchführt, die einen Porendurchmesser von 1.000 bis 50.000 Dalton
aufweisen.

6. Verfahren nach mindestens einem der Ansprüche 3 bis 5, **dadurch gekennzeichnet, dass** man die Mikro- und/oder Ultrafiltration bei Temperaturen im Bereich von etwa 10 bis etwa 60 °C durchführt.

7. Verfahren nach mindestens einem der Ansprüche 3 bis 6, **dadurch gekennzeichnet, dass** man die Säuerung durch Zugabe von Milchsäurekulturen durchführt.

8. Verfahren nach mindestens einem der Ansprüche 3 bis 7, **dadurch gekennzeichnet, dass** man die Säuerung durch Zugabe von Glucono-delta-Lacton (GDL) durchführt.

9. Verfahren nach mindestens einem der Ansprüche 3 bis 8, **dadurch gekennzeichnet, dass** man die Säuerung bei einer Temperatur von etwa 20 bis etwa 50 °C durchführt.

10. Verfahren nach mindestens einem der Ansprüche 3 bis 9, **dadurch gekennzeichnet, dass** man die Säuerung über einen Zeitraum von etwa 2 bis etwa 15 Stunden durchführt

11. Verfahren nach mindestens einem der Ansprüche 3 bis 10, **dadurch gekennzeichnet, dass** man während der Säuerung Lab zusetzt.

12. Verfahren nach mindestens einem der Ansprüche 3 bis 11, **dadurch gekennzeichnet, dass** man die Säuerung mit GDL durchführt und Lab zusetzt.

13. Verfahren nach mindestens einem der Ansprüche 3 bis 10, **dadurch gekennzeichnet, dass** man während der Säuerung Geschmacks- und Aromastoffe zusetzt.

14. Verfahren nach den Ansprüchen 12 und/oder 13, dass man die Geschmacks- und Aromastoffe in Mengen von etwa 1 bis etwa 5 Gew.-% zusetzt.

15. Verwendung des festen Milchproduktes nach Anspruch 1 oder des Produktes, das nach dem Verfahren des Anspruchs 3 erhalten wird als Ersatz für Brat- oder Grillkäse, insbesondere als Ersatz für Halloumi-Käse.
